# EUROPEAN PATENT APPLICATION

(11) **EP 2 386 320 A1**
(43) Date of publication of application: **16.11.2011**
(21) Application number: 11163311.1
(22) Date of filing: 21.04.2011
(51) Int. Cl.: A61L 2/04, C09J 7/00

(54) **Water-dispersed pressure-sensitive adhesive composition and method of production**

(30) Priority: 26.04.2010 JP 2010100942
(71) Applicant: Nitto Denko Corporation, Ibaraki-shi, Osaka 567-8680 (JP)
(72) Inventor: Takahashi, Akiko, Ibaraki-shi Osaka 567-8680 (JP); Wada, Shouhei, Ibaraki-shi Osaka 567-8680 (JP); Funatsu, Eriko, Ibaraki-shi Osaka 567-8680 (JP); Maruyama, Kouji, Ibaraki-shi Osaka 567-8680 (JP)
(74) Representative: Grünecker, Kinkeldey, Stockmair & Schwanhäusser

(57) **Abstract**

A water-dispersed pressure-sensitive adhesive (PSA) composition having a low perishability is provided. This PSA composition includes as a base polymer an acrylic polymer and, when held in a 30°C atmosphere for 5 days, the number of viable microorganisms present per milliliter of the composition following such storage is less than 10⁶ cells. Such a composition may be produced by employing viable cell-free water containing essentially no viable microorganisms as, of the water used in the course of production, at least the water used in a step subsequent to a final step in which the composition is held continuously at a temperature of at least 60°C for at least 30 minutes.

## Description

### CROSS-REFERENCE

This application claims priority from Japanese Patent Application No. 2010-100942, filed on April 26, 2010, the entire contents of which are incorporated herein by reference.

### BACKGROUND OF THE INVENTION

### 1. Field of the Invention

This invention relates to a water-dispersed pressure-sensitive adhesive composition having a low perishability.

### 2. Description of the Related Art

In recent years, environmental health concerns have brought about a desire for reduced emissions of volatile organic compounds (VOCs) within the field of pressure-sensitive adhesive (PSA) compositions and PSA sheets employed in various applications. Today, the use of PSA compositions in a form in which the PSA ingredients are dispersed in water is increasingly preferred. An example of the technical literature relating to water-dispersed PSA compositions is Japanese Patent Application Publication No. 2001-131511.

### SUMMARY OF THE INVENTION

However, water-dispersed PSA compositions designed to reduce VOC emissions are prone to the growth of bacteria which have contaminated the composition in the course of production. Unpleasant odors caused by such bacteria sometimes arise, particularly following storage at or above room temperature. One solution commonly employed to keep water-dispersed PSA compositions from spoiling is to add a preservative. Yet even when bacterial growth is suppressed by the addition of a preservative, unpleasant odors caused by bacteria and other microorganisms which have contaminated the composition prior to addition of the preservative still sometimes arise. Therefore, the ability to keep a water-dispersed PSA composition from spoiling without having to rely on a preservative would be useful.

It is therefore an object of the invention to provide a water-dispersed PSA composition which, even in a form that contains no preservative, has a low perishability. A further object of the invention is to provide a method of producing such a PSA composition.

According to the invention, there is provided a water-dispersed PSA composition which includes as a base polymer (the main ingredient among the polymer ingredients) an acrylic polymer. This PSA composition, when held in a 30°C atmosphere for 5 days (120 hours), has a number of viable microorganisms present per milliliter of the composition following storage (when 5 days have elapsed), which number is also referred to below as "the viable cell count after 5 days of storage at 30°C," of less than 10⁶ cells. With such a water-dispersed PSA composition, because the viable cell count after 5 days of storage at 30°C does not exceed the above value, the unpleasant odors from viable microorganisms which may be sensed when such a PSA composition is used can be suppressed to a high degree. What are referred to above as "viable microorganisms" are generally called "mesophilic aerobic microorganisms," and denote microorganisms in general which readily grow at temperatures of about 30°C to 35°C. There is no particular limitation on the microbial species.

In a preferred embodiment of the water-dispersed PSA composition disclosed herein, the total amount of volatile organic compounds (VOCs) released from a PSA sheet having a PSA layer made from the composition when the sheet has been held at 80°C for 30 minutes is not more than 100 µg per gram of the PSA sheet (this is sometimes indicated below as "100µg/g"). Because PSA compositions in which the total emissions of VOCs have been reduced in this way have a low impact on the natural environment and the working environment, PSAs and PSA sheets capable of being employed in articles of manufacture that are used in closed spaces, such as automotive and housing interior materials can be advantageously formed.

The invention also provides a method for producing a water-dispersed PSA composition that includes as a base polymer an acrylic polymer. This method is characterized in that at least the water used in a step subsequent to a final step in which the composition is held continuously at a temperature of at least 60°C for at least 30 minutes is water which contains essentially no viable microorganisms (viable cell-free water). With such a method, contamination by viable microorganisms is suppressed, making it possible to advantageously produce a water-dispersed PSA composition wherein unpleasant odors from viable microorganisms which may be sensed at the time of use are suppressed to a high degree.

In another aspect, the invention provides a PSA sheet having a PSA layer formed using any of the PSA compositions disclosed herein (which may be any of the PSA compositions produced by any of the methods disclosed herein). These PSA sheets have a low perishability (which may be determined from the viable cell count after holding the sheet at 30°C for 5 days), and are capable of suppressing to a high degree unpleasant odors which may be sensed at the time of use.

### BRIEF DESCRIPTION OF THE DRAWINGS

FIG. 1 is a schematic sectional view showing an embodiment of the PSA sheet according to the invention.
FIG. 2 is a schematic sectional view showing another embodiment of the PSA sheet according to the invention.
FIG. 3 is a schematic sectional view showing yet another embodiment of the PSA sheet according to the invention.
FIG. 4 is a schematic sectional view showing a further embodiment of the PSA sheet according to the invention.
FIG. 5 is a schematic sectional view showing a still further embodiment of the PSA sheet according to the invention.
FIG. 6 is a schematic sectional view showing an additional embodiment of the PSA sheet according to the invention.

### DETAILED DESCRIPTION OF THE INVENTION

Preferred embodiments of the invention are described below. Matters which are not specifically mentioned in the Specification but which are necessary for working the invention will be understood as matters of design by persons of ordinary skill in the art which are based on prior art in the field. The present invention can be practiced based on details disclosed in the Specification and on common general technical knowledge in the field.

The PSA composition disclosed herein is in the form of an aqueous dispersion (emulsion) in which an acrylic polymer serves as the base polymer. This PSA composition has a total viable count, as measured after 5 days of storage in a 30°C atmosphere, of less than 10⁶ cells per milliliter of the composition. The total viable count following 5 days of storage at 30°C is preferably 10⁴ cells/mL or less. If the total viable count is too high, unpleasant odors from viable microorganisms may become pronounced in the PSA composition, PSA formed from the composition, and manufactured articles which use the PSA. In this specification, storage of the PSA composition, unless noted otherwise, is carried out in a state where there is essentially no new contamination by viable microorganisms from the exterior (e.g., in a sealed vessel).

The viable cell count after 5 days of storage at 30°C can be determined by a hitherto known method for measuring the total viable count. The total viable count is typically determined by inoculating a sample composed of a predetermined amount of the PSA composition (which sample may be a liquid dilution of the composition) onto a standard agar culture medium or a culture medium having an equivalent ability to support growth, and measuring the number of colonies that have formed after 48 hours of cultivation at 35°C. The standard agar medium used may be one which contains 5 g of peptone, 2.5 g of yeast extract, 1 g of glucose and 15 g of agar per 1,000 mL of the medium, and which has a pH of 7.1±0.1. An example of a commercial culture media having an ability to support growth equivalent to that of a standard agar medium is available from Chisso Corporation under the trade name "Sanita-kun" (for viable microorganisms).

The PSA composition may be one which, in a test to evaluate the odor when a 50 mL sealed vessel containing 20 g of the composition is opened in a 23°C environment, is judged by at least 80% (preferably at least 85%) of a panel composed of randomly selected healthy men and women (e.g., about 30 people) ranging in age from the twenties to the forties to have no detectable unpleasant odors from viable microorganisms (i.e., odors from viable microorganisms that are of a degree as to feel unpleasant). Alternatively, the composition may be one which, in a test to evaluate the odors when a 50 mL sealed vessel containing, for example, 1 g of PSA formed from the PSA composition (typically, a PSA sheet having a PSA content of 1 g; that is, a PSA sheet in which the amount of PSA alone, exclusive of the substrate, is 1 g) is opened in a 23°C environment, is judged by a least 70% (preferably at least 75%) of the above panel to have no detectable unpleasant odors from viable microorganisms. In this specification, "PSA" refers to the residue that remains (typically, a PSA layer that has been formed by coating onto a substrate and drying) when the solvent in a PSA composition is removed such as by drying.
In this specification, "unpleasant odors from viable microorganisms" refers to odors which can be determined to originate from viable microorganisms, and might be typically thought of as a rotten or putrid smell. The offending substances may be the metabolites of viable microorganisms, or may be dead cells or products of the decay of such microorganisms. These offending substances may include nitrogen-containing substances such as ammonia, indoles and amines (e.g., trimethylamine); sulfur-containing compounds such as hydrogen sulfide and mercaptans; and fatty acids such as butyric acid. Therefore, the unpleasant odors from viable microorganisms may be thought of as being primarily the characteristic odors of these compounds or a combination of these odors.

The method of producing the water-dispersed PSA composition disclosed herein is characterized in that, of the water used in the course of producing the PSA composition, at least the water used in a step subsequent to a final step in which the PSA composition is held continuously at a temperature of at least 60°C for a period of at least 30 minutes (also referred to below as the "final heating step") contains essentially no viable microorganisms. Here, "water which contains essentially no viable microorganisms (viable cell-free water)" refers to a total viable count in 1 mL of the water of 10² or less. The number of viable microorganisms present per unit volume of water is the value calculated from the number of formed colonies measured after adding a 1 mL sample of the water to a standard agar medium and culturing at 35°C for 48 hours.

The above production process is composed primarily of the step of preparing an acrylic copolymer emulsion and the step of forming a final PSA composition by adjusting the pH, adhesiveness, viscosity, concentration and other properties of the emulsion (blending step). Typically, the step of preparing an acrylic copolymer emulsion (the step of carrying out an emulsion polymerization reaction; also referred to below as the "polymerization step") is the final heating step. That is, in the step subsequent to this emulsion preparation step (also referred to below as the "post-polymerization step"), heating at 60°C or above is not carried out. Therefore, in one aspect of the water-dispersed PSA composition disclosed herein, water containing essentially no viable microorganisms is used as the water employed in this post-polymerization step (also referred to below as the "work-up water" (the water added after polymerization)). This work-up water may be, for example, water added in order to dilute and collect emulsion residues adhering to the inside of the reaction vessel following removal of the emulsion such as by transfer to another vessel, water added in order to adjust the concentration of the PSA composition, or water for dissolving or dispersing other materials such as additives when such other materials are added to the PSA composition.

In the above PSA composition production process, it is preferable to employ water having a degree of hardness that does not hinder emulsification of the reaction mixture and the PSA composition (which water is sometimes referred to below simply as "soft water") as the water used as the dispersant when carrying out the polymerization reaction (water for polymerization) and as the work-up water. For example, use may be made of groundwater, well water, or either of these which has been subjected to softening treatment. The hardness of the soft water used is preferably not more than, for example 120 mg/L. If the hardness is too high, emulsification of the oil phase and the aqueous phase in the reaction mixture at the time of emulsion polymerization may be inadequate, which may hinder the polymerization reaction and result in a pronounced loss in the yield of acrylic polymer, may result in the formation of a large amount of agglomerate in the reaction mixture, or may cause the oil phase and aqueous phase of the resulting PSA composition to separate, compromising the adhesive performance of the composition.

Methods that may be employed for eliminating viable microorganisms from such water include the application of such treatment as heating, exposure to high-energy rays, and membrane filtration.
When heat treatment is carried out, it is preferable to heat the water until it reaches a temperature of about 60°C or more (typically, from 60°C to 100°C). In a preferred mode of heat treatment, the water being treated is held at a temperature of from 60°C to 80°C (e.g., from 70°C to 80°C) for a period of, for example, at least 30 minutes. In another preferred mode, the water being treated is held (for example, held for at least 5 minutes) at a temperature of at least 90°C or is heated until it boils (typically, to about 100°C). The water that has been heat-treated may be used directly as is, or may be cooled to a desired temperature (e.g., room temperature, or about 23°C) and used.
Exposure to high-energy rays may be carried out in accordance with a hitherto known method. For example, the water may be exposed to a predetermined amount of ultraviolet light (UV) or electromagnetic radiation. By way of illustration, the water may be irradiated with UV at an illuminance of about 35,000 µW/cm² for at least 1 minute, or so as to receive an amount of irradiation (J/cm²) equivalent to or greater than this.
In cases where membrane filtration treatment is carried out, the water may be passed through a porous membrane having a pore size of 0.2 µm or less (e.g., a reverse osmosis membrane, an ultrafiltration membrane or a microfiltration membrane).
The method of producing a PSA composition disclosed herein may be advantageously carried out in an embodiment which additionally includes the step of preparing a viable cell-free water for use in this method. In a preferred embodiment, the viable cell-free water preparation step includes at least one type of treatment from among heat treatment by heating water at a temperature of at least 60°C, high-energy treatment by exposing water to high-energy rays, and membrane filtration treatment by passing water through a porous membrane having an average pore size of not more than 0.2 µm.

The acrylic polymer emulsion may be prepared by emulsion polymerizing the starting monomer which includes at least one, two or more types of acryl (meth)acrylate. Emulsion polymerization when preparing this acrylic polymer emulsion may be carried out by suitably employing, for example, various known monomer feed methods, polymerization conditions (polymerization temperature, polymerization time, polymerization pressure, etc.), and materials (polymerization initiators, surfactants). For example, monomer feed methods that may be used include any of the following: bulk charging in which all of the starting monomer is fed into the polymerization vessel at one time, continuous feeding (dropwise addition), and divided feeding (dropwise addition). Alternatively, some or all of the starting monomer may first be mixed with water and emulsified, and the resulting liquid emulsion fed to the reaction vessel. The temperature at which emulsion polymerization is carried out may be set to, for example, from about 20°C to about 100°C (typically, from 40°C to 80°C, and preferably from 60°C to 80°C).

The water used for polymerization may be any of the following: water which has not been subjected in particular to sterilization (unsterilized water), water which has been subjected to sterilization treatment to a level where essentially no viable microorganisms are present (sometimes referred to below as simply "sterilized water"), and water which has been subjected to filtration treatment to a level where essentially no viable microorganisms and no dead cells are present (sometimes referred to below as simply "filtered water").
In cases where emulsion polymerization is carried out at a temperature of at least 60°C, because essentially all of the viable microorganisms present in the reaction solution are destroyed by heating during polymerization when emulsion polymerization is conducted at this temperature for an ordinary reaction time, in such an embodiment, any of the above types of water may be used as the water for polymerization. From the standpoint of reducing costs and effort, it is advantageous to use untreated water. In cases where emulsion polymerization is carried out at a temperature below 60°C, in cases where, even at a polymerization temperature of 60°C or more, the polymerization time is insufficient for heat sterilization, in cases where the desire is to suppress the number of viable microorganisms which are capable of propagating during the time until the reaction mixture reaches 60°C at the time of emulsion polymerization, and in cases where more reliable sterilization is desired, preferred use may be made of the above sterilized water and/or the above filtered water as the water for polymerization.

Because not only viable microorganisms, but also dead microbial cells which may lower the optical properties (e.g., transparency) and may serve as allergens have also been removed therefrom, the above filtered water is advantageous as the water used in the production of PSA compositions which may be employed to form PSA sheets for optical or medical use. For example, by using such filtered water as water for polymerization and work-up water, it is possible to increase the optical properties of PSA sheets formed from the PSA composition and to reduce the content of substances capable of becoming allergens.

The above acrylic polymer is preferably one in which the primary monomer (the primary monomer component; that is, the component accounting for at least 50 wt % of the total amount of monomer ingredients making up the acrylic polymer) is an alkyl (meth)acrylate. In this specification, "(meth)acrylate" refers collectively to acrylate and methacrylate. Likewise, "(meth)acryloyl" refers collectively to acryloyl and methacryloyl, and "(meth)acrylic" refers collectively to acrylic and methacrylic.

The alkyl (meth)acrylate may be of one, two or more types selected from among, for example, alkyl (meth)acrylates of formula (I) below.

CH₂=C(R¹)COOR² (I)

Here, R¹ in formula (I) is a hydrogen atom or a methyl group. R² in formula (I) is an alkyl group with 1 to 20 carbon atoms. The alkyl group may be linear or branched. Specific examples of alkyl (meth)acrylates of formula (I) include methyl (meth)acrylate, ethyl (meth)acrylate, n-propyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. Of these, alkyl (meth)acrylates in which R² is an alkyl group with 2 to 14 carbon atoms (such a range in the number of carbon atoms is sometimes indicated below as "C₂₋₁₄") are preferred, and alkyl (meth)acrylates in which R² is a C₂₋₁₀ alkyl group (e.g., n-butyl, 2-ethylhexyl) are more preferred. The amount of alkyl (meth)acrylate included in the starting monomer may be, for example, from 50 wt % to 98 wt % of the total amount of monomer ingredients. The composition of the starting monomers typically corresponds approximately to the polymerization ratio of the acrylic polymer obtained by polymerizing these starting monomers.

In a preferred embodiment, of the total amount of alkyl (meth)acrylate which may be used to form the above acrylic copolymer, at least about 70 wt % (more preferably, at least about 90 wt %) is an alkyl (meth)acrylate in which R² in above formula (I) is C₂₋₁₀ (more preferably, C₄₋₈). Essentially all of the alkyl (meth)acrylate used may be C₂₋₁₀ alkyl (more preferably, C₄₋₈ alkyl) meth)acrylate. The above starting monomers may have a composition which includes only butyl acrylate (BA), includes only of 2-ethylhexyl acrylate (2EHA), or includes both BA and 2EHA, as the alkyl (meth)acrylate.

In addition to the alkyl (meth)acrylate serving as the main monomer, the above starting monomer may also include other monomers as optional monomers. Such optional monomers are not subject to any particular limitation, provided they are copolymerizable with the alkyl (meth)acrylate used here; one, two or more types of monomer selected from various monomers may be used. For example, use may be made of ethylenically unsaturated monomers having one, two or more functional groups selected from among carboxyl groups, alkoxysilyl groups, hydroxyl groups, amino groups, amide groups and epoxy groups. These functional group-containing monomers are useful for introducing crosslink sites onto the acrylic polymer. The types of optional monomer and the ratios in which they are included (copolymerization ratio) may be suitably set while taking into account, for example, the types and amounts of crosslinking agents used, the type of crosslinking reaction, and the desired degree of crosslinking (crosslink density).

Illustrative examples of carboxyl group-containing monomers include ethylenically unsaturated monocarboxylic acids such as (meth)acrylic acid and crotonic acid; ethylenically unsaturated dicarboxylic acids such as maleic acid, itaconic acid and citraconic acid; and ethylenically unsaturated dicarboxylic anhydrides such as maleic anhydride and itaconic anhydride.
Illustrative examples of alkoxysilyl group-containing monomers (silanol group-forming monomers) include 3-(meth)acryloxypropyltrimethoxysilane, 3-(meth)acryloxypropyltriethoxysilane, 3-(meth)acryloxypropylmethyldimethoxysilane and 3-(meth)acryloxypropylmethyldiethoxysilane.

Illustrative examples of hydroxyl group-containing monomers include hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate and [4-(hydroxymethyl)cyclohexyl]methyl acrylate; and alkenyl alcohols such as vinyl alcohol and allyl alcohol.

Illustrative examples of amino group-containing monomers include aminoethyl (meth)acrylate, N,N-dimethylaminoethyl (meth)acrylate and N,N-dimethylaminopropyl (meth)acrylate.
Illustrative examples of amide group-containing monomers include (meth)acrylamide, N,N-dimethyl (meth)acrylamide, N-butyl (meth)acrylamide, N-methylol (meth)acrylate, N-methylolpropane (meth)acrylamide, N-methoxymethyl (meth)acrylamide and N-butoxymethyl (meth)acrylamide.
Illustrative examples of epoxy group-containing monomers include glycidyl (meth)acrylate, methylglycidyl (meth)acrylate and allylglycidyl ether.

Examples of polymerization initiators include, but are not limited to, azo initiators, peroxide initiators, substituted ethane initiators, and redox initiators which are a combination of a peroxide and a reducing agent.
Illustrative examples of azo initiators include 2,2'-azobis[N-(2-carboxyethyl)-2-methylpropionamidine] hydrate, 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl)propane] dihydrochloride and 2,2'-azobis(N,N'-dimethyleneisobutylamidine) dihydrochloride.
Examples of peroxide initiators include persulfates such as potassium persulfate and ammonium persulfate; and benzoyl peroxide, t-butyl hydroperoxide and hydrogen peroxide.
Examples of substituted ethane initiators include phenyl-substituted ethanes.
Examples of redox initiators include combinations of a persulfate with sodium bisulfite and combinations of a peroxide with sodium ascorbate.

The amount of polymerization initiator used may be suitably selected according to, for example, the type of initiator and the type of monomer (composition of the starting monomers). However, it is generally suitable to select from a range of, for example, about 0.005 part by weight to about 1 part by weight per 100 parts by weight of the total monomer ingredients.
The method employed to feed the polymerization initiator may be bulk charging in which essentially all of the polymerization initiator to be used is placed in the reaction vessel before the feeding of the starting monomer begins (typically, an aqueous solution of the polymerization initiator is provided within the reaction vessel), continuous feeding (dropwise addition), and divided feeding (dropwise addition).

An anionic emulsifying agent or a nonionic emulsifying agent may be used as the emulsifying agent (surfactant). Illustrative examples of anionic emulsifying agents include sodium polyoxyethylene alkyl ether sulfate, ammonium polyoxyethylene alkyl phenyl ether sulfate, sodium polyoxyethylene alkyl phenyl ether sulfate, sodium lauryl sulfate, ammonium lauryl sulfate, sodium dodecylbenzene sulfonate and sodium polyoxyethylene alkyl sulfosuccinate. Illustrative examples of nonionic emulsifying agents include polyoxyethylene alkyl ethers, polyoxyethylene alkyl phenyl ethers, polyoxyethylene fatty acid esters and polyoxyethylene-polyoxypropylene block polymers. Radical polymerization emulsifying agents (reactive emulsifying agents) having a structure in which radical polymerizable groups (vinyl, propenyl, isopropenyl, vinyl ether (vinyloxy), allyl ether (allyloxy), etc.) have been introduced may also be used as these anionic or nonionic emulsifying agents. Such emulsifying agents may be used singly as one type only or as combinations of two or more types. The amount of emulsifying agent used (solids basis) may be set to from about 0.2 part by weight to about 10 parts by weight (preferably from about 0.5 part by weight to about 5 parts by weight) per 100 parts by weight of all the monomer ingredients.

Where necessary, various types of known chain transfer agents (which may be thought of as molecular weight modifier or degree of polymerization modifier) may be used in the above polymerization. Such chain transfer agents may be of one, two or more types selected from among, for example, mercaptans such as dodecyl mercaptan (dodecanethiol), glycidyl mercaptan, 2-mercaptoethanol, mercaptoacetic acid, 2-ethylhexyl thioglycolate and 2,3-dimercapto-1-propanol. The amount of chain transfer agent used may be set to, for example, about 0.001 part by weight to about 0.5 part by weight per 100 parts by weight of all the monomer ingredients. This amount of use may even be from about 0.02 part by weight to about 0.1 part by weight.

Where necessary, one, two or more types of a common crosslinking agent (the active ingredient typically being a crosslinkable compound having two or more crosslinkable functional groups per molecule which are capable of reacting with functional groups included on the above acrylic copolymer) in the field of aqueous PSA compositions may be included in the water-dispersed PSA composition disclosed herein. For example, use may be made of a carbodiimide crosslinking agent, a hydrazine crosslinking agent, an epoxy crosslinking agent, an isocyanate crosslinking agent, an oxazoline crosslinking agent, an aziridine crosslinking agent, a metal chelate crosslinking agent or a silane coupling agent. Or a PSA composition which does not include such a crosslinking agent may be employed.

The water-dispersed PSA composition disclosed herein may be formed by adding, where necessary, materials for adjusting the adhesiveness, pH, viscosity, concentration and other properties to the acrylic polymer emulsion obtained as described above. In cases where, aside from the water already included in these materials, water is newly added in this post-polymerization step, water containing essentially no viable aerobic microorganisms is used as the work-up water.

The PSA composition disclosed herein may also include, in addition to the above acrylic polymer, a tackifier. The tackifier used may be of one, two or more types selected from various types of tackifier resins, including rosin resins, rosin derivative resins, petroleum resins, terpene resins, phenolic resins and ketone resins.

Illustrative examples of such rosin resins include not only rubber rosin, wood rosin and tall oil rosin, but also stabilizer rosins (e.g., stabilized rosins obtained by the disproportionation or hydrogenation treatment of such rosins), polymerized rosins (e.g., multimers, typically dimers, of the above rosins) and modified rosins (e.g., unsaturated acid-modified rosins obtained by modification with an unsaturated acid such as maleic acid, fumaric acid or (meth)acrylic acid).
Illustrative examples of rosin derivative resins include esterification products of rosin resins, phenol modification products of rosin resins, and esterification products of the latter.
Illustrative examples of petroleum resins include aliphatic petroleum resins, aromatic petroleum resins, copolymeric petroleum resins, alicyclic petroleum resins, and hydrogenation products thereof.
Illustrative examples of terpene resins include α,-pinene resins, β-pinene resins, aromatic modified terpene resins and terpene-phenol resins.
Examples of ketone resins include ketone resins obtained by the condensation of a ketone (e.g., aliphatic ketones such as methyl ethyl ketone, methyl isobutyl ketone and acetophenone; alicyclic ketones such as cyclohexanone and methyl cyclohexanone) with formaldehyde.

The amount of tackifier included may be suitably selected according to the desired adhesiveness. For example, based on the nonvolatiles content (solid content), this may be set to about 50 parts by weight or less per 100 parts by weight of the acrylic copolymer. Generally, it is suitable to set the amount of tackifier included to about 40 parts by weight or less.

Because the PSA composition is produced so as not to be contaminated by viable microorganisms, even without the addition of a preservative, by storage or use in an environment where essentially no new contamination by viable microorganisms from the exterior occurs (e.g., in a sealed vessel), it is possible to maintain a state containing essentially no viable microorganisms. Therefore, the art disclosed herein may be practiced in a form where the PSA composition contains essentially no preservative. Such an embodiment may be advantageously employed in, for example, cases where the use of a preservative is undesirable for therapeutic purposes, and in cases where there exists a desire to reduce the content of preservative in other applications. By a PSA composition "containing essentially no preservative," what is meant is that either no preservative newly (intentionally) added afterwards is contained or that the content of preservative is less than 0.01 wt % of the total amount (including the solvent) of the PSA composition. In cases where preservative is already present in the starting materials used to produce the composition, because the preservative is one that was unintentionally added, this does not correspond to the "newly added" preservative mentioned above. The art disclosed herein may also be practiced in a form where the PSA composition includes a preservative. Such an embodiment may be advantageously employed in, for example, cases where the PSA composition is stored for a long period of time, and in cases where the PSA composition may be stored and/or used in a manner where contamination by viable microorganisms cannot be prevented (is not guaranteed). Preservatives used as such secondary or preparatory anti-spoiling means may be added in a post-polymerization step. The amount of preservative intentionally added to the PSA composition may be, for example, from about 0.01 wt % to about 0.3 wt % of the total amount of the PSA composition (including solvent).

The PSA composition disclosed herein may include an acid or base (ammonia water, etc.) for the purpose of, e.g., adjusting the pH. Other optional ingredients which may be included in the composition include various common additives in the field of aqueous PSA compositions, such as thickeners, leveling agents, plasticizers, fillers, colorants (pigments, dyes, etc.), stabilizers and antioxidants.

The PSA sheet according to this invention has a PSA layer formed using any one of the PSA compositions disclosed herein. The PSA sheet may be in a form where such a PSA layer is fixedly (without the intention of separating the PSA layer from the substrate) provided on one or both sides of a sheet-shaped substrate (backing), such a PSA sheet being referred to as a "PSA sheet with a substrate"; or may be in a form where the substrate supporting the PSA layer is removed as a release liner at the time of attachment, such a PSA sheet being referred to as a "substrate-less PSA sheet." The concept here of a "PSA sheet" may encompass what are referred to as, for example, PSA tapes, PSA labels and PSA films. The PSA layer is not limited to a continuously formed layer of PSA, and may even be a PSA layer formed in a regular or random pattern of, for example, points or stripes.

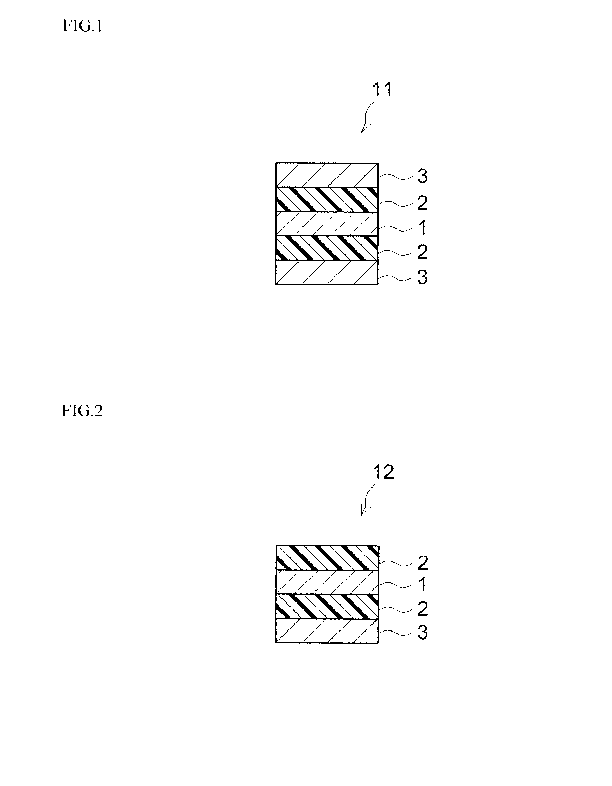

The PSA sheet disclosed herein may have, for example, the cross-sectional structures shown schematically in FIGS. 1 to 6. Of these diagrams, FIGS. 1 and 2 are examples of PSA sheets with substrates that are adhesive on both sides (double-sided PSA sheets with a substrate). The PSA sheet 11 shown in FIG. 1 has a structure in which a PSA layer 2 is provided on either side of a substrate 1, and these PSA layers 2 are each protected by at least a release liner 3 having a release face on at least the PSA layer side thereof. The PSA sheet 12 shown in FIG. 2 has a structure in which a PSA layer 2 is provided on either side of a substrate 1, and one of the PSA layers 2 is protected by a release liner 3 having release faces on both sides thereof. This type of PSA sheet 12, by being coiled up, can be given a structure in which the second PSA layer 2 directly contacts the back face of the release liner 3 so that the second PSA layer 2 is also protected by the release liner 3.

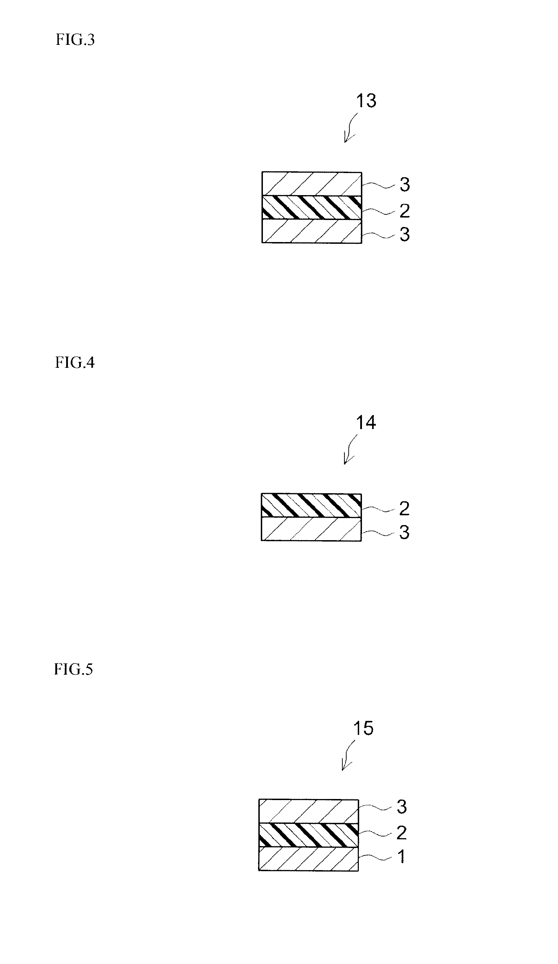

FIGS. 3 and 4 are examples of substrate-less PSA sheets. The PSA sheet 13 shown in FIG. 3 has a structure in which both sides of a substrate-less PSA layer 2 are each protected by a release liner 3 having a release face on at least the PSA layer side thereof. The PSA sheet 14 shown in FIG. 4 has a structure in which one side of the substrate-less PSA layer 2 is protected by a release liner 3 having release faces on both sides thereof. This PSA sheet 14, by being coiled up, can be given a structure in which the second side of the PSA layer 2 directly contacts a release liner 3 and this second side is also protected by the release liner 3.

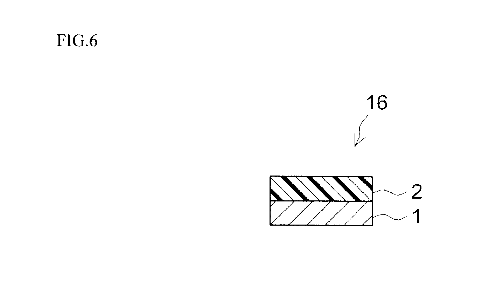

FIGS. 5 and 6 are examples of PSA sheets with a substrate. The PSA sheet 15 shown in FIG. 5 has a structure in which a PSA layer 2 is provided on one side of a substrate 1, and the front face (PSA face) of the PSA layer 2 is protected by a release liner 3 having a release face on the PSA layer side thereof. The PSA sheet 16 shown in FIG. 6 has a structure in which a PSA layer 2 is provided on one face of a substrate 1. The other face of the substrate 1 is a release face. This PSA sheet 16, by being coiled up, can be given a structure in which the PSA layer 2 directly contacts the second face and the front face (PSA face) of the PSA layer 2 is protected by the second face of the substrate 1.

The above PSA layers can be advantageously formed by applying the water-dispersed PSA composition disclosed herein to a predetermined surface and drying. For example, in the case of a PSA sheet with a substrate, a PSA composition may be directly applied to a substrate so as to form a PSA layer, or a PSA layer formed on a release liner may be superimposed (transferred) onto a substrate.

Application of the PSA composition (typically, coating) may be carried out using a conventional coater (e.g., a gravure roll coater, reverse roll coater, kiss roll coater, dip roll coater, bar coater, knife coater, spray coater). The thickness of the PSA layer is not subject to any particular limitation, and may be suitably selected according to the application.

The substrate in such a PSA sheet may be suitably selected according to the intended use of the PSA sheet. Illustrative examples of such substrates include plastic films such as polypropylene film, ethylene-propylene copolymer film, polyester film and polyvinyl chloride film; foam substrates such as polyurethane foam and polyethylene foam; papers such as kraft paper, crepe paper and Japanese paper; woven fabrics such as cotton fabric and staple fiber fabric; nonwoven fabrics such as polyester nonwoven fabric and Vinylon nonwoven fabric; and metal foils such as aluminum foil and copper foil. Plastic films that may be used include either non-oriented films and oriented (monoaxially oriented or biaxially oriented) films. The face of the substrate on which the PSA layer is provided may have been subjected to surface treatment such as the coating of a primer or corona discharge treatment. The thickness of the substrate may be suitably selected according to the intended use.

The release liner which protects or supports the PSA layer (and which may have both protective and supporting functions) is not subject to any particular limitation in the material or construction thereof; that is, any suitable release liner may be selected for use from among known release liners. For example, advantageous use may be made of a release liner with a construction wherein release treatment has been applied to at least one surface of a substrate (typically, a release treatment layer made of a release treatment agent has been provided). The substrate in such a release liner (i.e., the substrate which is subjected to release treatment) may be suitably selected for use from among various types of plastic films, papers, fabrics, rubber sheets, foam sheets, metal foils, and composites thereof. A known or conventional release treatment agent (examples of which include silicone, fluorinated, and long-chain alkyl-type release treatment agents) may be used to form the release treatment layer. Alternatively, a low-adhesion substrate composed of a fluoropolymer (e.g., polytetrafluoroethylene, polychlorotrifluoroethylene, polyvinyl fluoride, polyvinylidene fluoride, tetrafluoroethylene-hexafluoropropylene copolymer, chlorofluoroethylene-vinylidene fluoride copolymer) or a low-polarity polymer (e.g., olefin resins such as polyethylene and polypropylene) may be used as the release liner without applying a release treatment to the surface of the substrate. It is also possible to use as the release liner a low-adhesion substrate to the surface of which a release treatment has been applied.

Because the PSA sheet disclosed herein is formed using a water-dispersed PSA composition, the total amount of VOCs released when the PSA sheet is held at 80°C for 30 minutes may be 100 µg per gram of the PSA sheet (this is sometimes indicated below as "100 µg/g") or less. This PSA sheet may be preferably used in applications for which a reduced level of VOCs is desired, such as household appliances and office equipment which are used indoors, and in automobiles and the like which are essentially closed chambers. A value measured by the following method may be employed as the total emissions of VOCs.

### Method for Measuring Total Emissions of VOCs

A vial in which a sample of a predetermined size containing a PSA layer has been placed is heated at 80°C for 30 minutes and, using a Headspace Autosampler (HSS), 1.0 mL of gas in a heated state is injected into a gas chromatograph (GC). Based on the resulting gas chromatogram, peak assignments and quantitative determinations are carried out, by means of standard substances, for the volatile substances (e.g., the monomers used in synthesis of the acrylic polymer, the solvent used to produce the subsequently described tackifying resin emulsion) predicted from the materials used to produce the PSA layer, and other (difficult to assign) peaks are quantified as the toluene equivalents. These are added together to determine the total VOC emissions (µg/g) per gram of PSA sheet (excluding release liner) contained in the sample.

A total emission of VOCs per gram of the PSA sheet of 100 µg or less typically corresponds to a total emission of VOCs per gram of PSA of 150 µg or less. Based on the grammage of the PSA sheet substrate on which measurement is carried out, the total emission of VOCs can be converted from a numerical value per gram of PSA sheet to a numerical value per gram of PSA. The substrate has a grammage of typically from about 10 g/m² to about 50 g/m².

The PSA composition disclosed herein may be one such that, following storage at 30°C for 5 days, the PSA formed from the composition has a fluorescence intensity per gram of the PSA sample, as measured by the following fluorescence intensity measurement method, of less than 5.5x10⁵/g (preferably 5.0x10⁵/g or less). For such a PSA composition, the level of unpleasant odor detectable by the senses during use may be low. If the fluorescence intensity is too high, the unpleasant odor from viable microorganisms may become pronounced.

### Method of Measuring Fluorescence Intensity

(A) A PSA composition is coated onto a first side of a release liner (high-quality paper coated on both sides with a silicone release agent) and dried at 100°C for 2 minutes, thereby producing a substrate-less PSA sheet having a 60 µm thick PSA layer. Two such sheets are furnished for use and a double-sided PSA sheet is formed by attaching a nonwoven fabric having a thickness of 40 µm and a grammage of 14 g/m² to the PSA layer of the first PSA sheet, and attaching the PSA layer of the second PSA sheet to this nonwoven fabric. The resulting double-sided PSA sheet is held at 50°C for one day (24 hours), thereby giving a measurement sample.
(B) Using an "UltraClean Microbial DNA Isolation Kit" available under this trade name from MO BIO Laboratories, Inc., DNA is extracted from a measurement sample having a known mass (e.g., an amount of PSA, excluding the substrate, of about 0.2 g). The absorbance of the extracted DNA at λ= 260 nm is measured with a spectrophotometer, and the mass is computed. The extraction method, which is performed according to the kit manual, involves disrupting the microbial cells with glass beads, extracting the DNA fraction with a solvent, and carrying out purification with a DNA adsorption column. During DNA extraction, the microbial cells are not separated from the PSA; instead, the cells are disrupted together with the PSA.
(C) Using an "illustra GenomiPhi V2 DNA Isolation Kit," available under this trade name from GE Healthcare, amplification of the genomic DNA is carried out according to the kit manual for 10 ng of the extracted DNA.
(D) In order to standardize the amount of bacterial DNA, PCR amplification is carried out under the cycle conditions shown in Table 1 with bacterial 16S rDNA as the target. Both 341F (with GC clamp) and 518R, which are V3 regions specific to the above 16S rDNA, are used as the amplification primers. To this are added 1 µL of the genomic DNA amplification solution obtained in step (C), 1.25 units/reaction of DNA polymerase (available under the trade name "Ampli Taq Gold" from Applied Biosystems) and 20 pmol of each of the above primers, and distilled water is used to adjust the final concentrations to 2 mM MgCl₂, 0.2 mM dNTP Mix (available from Invitrogen) and 1 × PCR buffer, giving 50 µL of a PCR reaction mixture. PCR amplification is carried out on this PCR reaction mixture under the cycle conditions shown in Table 1.

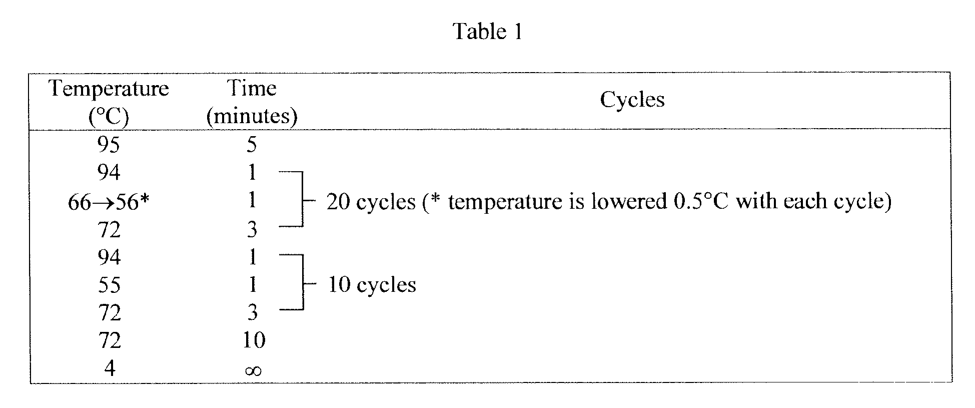

(E) Following the completion of amplification, the PCR product in the 10 µL of the PCR reaction mixture is isolated by electrophoresis (100 V, 20 minutes) using 1.5% agarose gel, and stained for 30 minutes with a nucleic acid staining reagent (available under the trade name "SYBR Gold" from Molecular Probe). The agarose gel is photographed with a gel imaging system (Gel Doc, available from Bio Rad), and the fluorescence intensity of the band corresponding to the target DNA that has been isolated and stained is digitized using image analysis software (available under the trade name "Quality One" from Bio Rad). Using the formula shown below, the fluorescence intensity F per gram of the PSA sample employed in this measurement is calculated, as an indicator of the bacterial gene dosage, from the above fluorescence intensity, the quantitatively determined mass of the sample and the amount of DNA extracted from the sample:
F = fluorescence intensity (measured value)/(mass of PSA sheet sample - mass of substrate).

As described above, because the art disclosed herein is able to effectively prevent contamination of the PSA composition by viable microorganisms, the above PSA composition is able to exhibit particularly striking effects in embodiments having compositions (monomer compositions, etc.) and/or properties (pH (about 7±2), concentration, etc.) that are particularly susceptible to the growth of viable microorganisms.

### EXAMPLES

Several examples of the invention are described below, although these specific examples are not intended to limit the scope of the invention. In the description that follows, unless noted otherwise, all references to "parts" and "%" are based on weight.

### Odor Test

Eight PSA compositions having the different total viable cell counts per unit volume shown in Table 2 were prepared, 20 g of each composition was placed in individual 50 mL screw-cap tubes, and the tubes were capped, thereby giving test samples. Thirty healthy men and women ranging in age from the twenties to the forties were randomly chosen as monitors. The monitors, one person at a time, opened the cap on each tube in a 23°C atmosphere, sniffed the odor, and made a judgment as to whether an unpleasant odor from viable microorganisms was present.
Eight PSA sheets having a PSA layer and having the fluorescence intensities per unit mass of the PSA sample for measurement indicated in Table 3 were prepared, an amount of each PSA sheet corresponding to 1 g of PSA was placed in a 50 mL screw-cap tube, and the tubes were capped to give test samples. Here too, thirty healthy men and women ranging in age from the twenties to the forties were randomly chosen as monitors. The monitors, one person at a time and in the same way as described above, made a judgment for each sample as to whether an unpleasant odor from viable microorganisms was present.
These results are collected together and shown in Tables 2 and 3, respectively.

**Table 2**

| | | | | | | | | |
|---|---|---|---|---|---|---|---|---|
| Total viable count (cells/mL) | 10 | 10² | 10³ | 10⁴ | 10⁵ | 10⁶ | 10⁷ | 10⁸ |
| Number of monitors who found odor to be unpleasant | 0 | 0 | 0 | 0 | 0 | 26 | 30 | 30 |

**Table 3**

| | | | | | | | | |
|---|---|---|---|---|---|---|---|---|
| Fluorescence intensity (/g) | 4×10⁵ | 4.5×10⁵ | 5×10⁵ | 5.5×10⁵ | 6×10⁵ | 6.5×10⁵ | 7×10⁵ | 7.5×10⁵ |
| Number of monitors who found odor to be unpleasant | 0 | 0 | 0 | 9 | 11 | 14 | 22 | 30 |

As is apparent from Table 2, in PSA compositions in which the total viable count per mL of PSA composition was less than 10⁶ cells, an odor from viable microorganisms that was felt to be unpleasant was not sensed. On the other hand, in PSA compositions in which this total viable count was 10⁶ or more, most of the monitors detected an unpleasant odor from viable microorganisms.
As shown in Table 3, in PSA compositions in which the fluorescence intensity per gram of PSA composition measured was less than 5.5×10⁵, an odor from viable microorganisms that was felt to be unpleasant was not sensed. On the other hand, in a PSA composition having a fluorescent intensity of 5.5×10⁵ or more, at least 30% of the monitors detected an unpleasant odor from viable microorganisms. Hence, as the fluorescence intensity rose, an increasing number of monitors found the odor to be unpleasant.

### Production of PSA Compositions and PSA Sheets

In the following examples, soft water that had been heated at 80°C for 30 minutes was used as the heat-treated water. Soft water that had been UV irradiated for 1 minute at an illuminance of 35,000 µW/cm² was used as the UV-irradiated water.

### Example 1

A monomer emulsion was prepared by emulsifying 86.5 parts of butyl acrylate (BA), 9.6 parts of 2-ethylhexyl acrylate (2EHA), 3.8 parts of acrylic acid (AA), 0.07 part of 3-methacryloxypropyltrimethoxysilane (a silanol group-forming monomer available under the trade name "KBM-503" from Shin-Etsu Chemical) and 0.05 part of dodecanethiol (a chain transfer agent) in 29 parts of unsterilized, room-temperature soft water (water for polymerization) in the presence of 2 parts of sodium polyoxyethylene lauryl sulfate (emulsifying agent).
A reaction vessel equipped with a condenser, a nitrogen inlet, a thermometer, a dropping tube and a stirrer was charged with 40 parts of unsterilized room-temperature soft water (water for polymerization) and 0.1 part of 2,2'-azobis[N-(2-carboxyethyl)-2-methylpropionamidine] hydrate (available under the trade name "VA-057" from Wako Pure Chemical Industries, Ltd.), and the mixture was stirred at 60°C for 1 hour under nitrogen gas flow. While holding the system at 60°C, the above monomer emulsion was gradually added dropwise thereto over a period of 4 hours. Following the completion of addition, stirring was additionally carried out at 60°C for 3 hours, then 0.075 part of hydrogen peroxide and 0.15 part of ascorbic acid were added. Heating was then stopped and the contents were stirred for 1 hour, following which 0.07 part of ammonia water was added and stirring was carried out for another 30 minutes, thereby giving an aqueous dispersion of an acrylic copolymer. The weight-average molecular weight of the THF-soluble portion of this acrylic polymer was 35×10⁴, and the ethyl acetate-insoluble content was 55%.
To the resulting aqueous dispersion of acrylic copolymer were added 30 parts of a tackifier (a rosin phenol resin available under the trade name "E-200NT" from Arakawa Chemical Industries, Ltd.), 0.47 part of a thickener (available under the trade name "Aron B-500" from Toagosei Co., Ltd.), 0.4 part of ammonia water and 2.5 parts of heat-treated water (work-up water) per 100 parts by weight of the copolymer, thereby giving the water-dispersed PSA composition of this example.

After storing this PSA composition at 30°C for 5 days, it was coated onto one side of a release liner (high-quality paper coated on both sides with a silicon release agent) and dried at 100°C for 2 minutes, thereby giving a release liner on which a 60 µm thick PSA layer had been provided (substrate-less PSA sheet). Two such sheets were prepared. A nonwoven fabric having a thickness of 40 µm and a grammage of 14 g/m² was attached to the PSA layer on the release liner of the first sheet, and the PSA layer on the release liner of the second sheet was attached to this nonwoven fabric to give a double-sided PSA sheet. This was held at 50°C for 1 day (24 hours), thereby giving a sample for evaluation. The ethyl acetate-insoluble content of the PSA thus obtained was 40%.

### Example 2

Aside from using UV-irradiated water as the work-up water, a PSA composition, substrate-less PSA sheet and double-side PSA sheet according to this example were obtained in the same way as in Example 1.

### Example 3

Aside from using UV-irradiated water as the water for polymerization, a PSA composition, substrate-less PSA sheet and double-side PSA sheet according to this example were obtained in the same way as in Example 1.

### Example 4

Aside from using UV-irradiated water as the water for polymerization, a PSA composition was obtained in the same way as in Example 1. A preservative (available under the trade name "Neo Sintol 2208" from Sumika Enviro-Science Co., Ltd.) was added in a ratio of 0.025% to this PSA composition, thereby giving the PSA composition of the present example. Aside from using this composition, a substrate-less PSA sheet and a double-sided PSA sheet according to this example were obtained in the same way as in Example 1.

### Example 5

Aside from setting the amount of preservative (the same as in Example 4) added to 0.05%, a PSA composition, a substrate-less PSA sheet and a double-sided PSA sheet according to this example were obtained in the same way as in Example 4.

### Example 6

Aside from setting the amount of preservative (the same as in Example 4) added to 0.1%, a PSA composition, a substrate-less PSA sheet and a double-sided PSA sheet according to this example were obtained in the same way as in Example 4.

### Example 7

Aside from using unsterilized soft water as the water for polymerization and the work-up water, a PSA composition, a substrate-less PSA sheet and a double-sided PSA sheet according to this example were obtained in the same way as in Example 1.

### Example 8

The same preservative as in Example 4 was added in a ratio of 0.001 % to the PSA composition of Example 7, thereby giving a PSA composition according to this example. Aside from using this composition, a substrate-less PSA sheet and a double-sided PSA sheet were obtained in the same way as in Example 1.

### Example 9

Aside from using UV-treated water as the work-up water, a PSA composition according to this example was obtained in the same way as in Example 8. Aside from using this composition, a substrate-less PSA sheet and a double-sided PSA sheet according to this example were obtained in the same way as in Example 1.

The following tests were carried out on each of the PSA compositions and PSA sheets obtained in Examples 1 to 9. The results are shown, together with details on each example, in Table 4. The amount of preservative added in Table 4 does not include the amount of preservative that was included beforehand in the tackifier and other ingredients employed in the respective examples.

### Measurement of Total Viable Count

Prior to storage at 30°C for 5 days, each PSA composition was diluted 100-fold with distilled water, and 1 mL of the dilution was added to a sheet culture medium (available from Chisso Corporation under the trade name "Sanita-kun" (for viable microorganisms)). This was held at 35°C for 48 hours, following which the confirmed colony count was multiplied by 100, thereby giving the initial total viable count per mL of PSA composition. The total viable count for each PSA composition following 5 days of storage at 30°C was similarly determined.

### Measurement of Total Emission of VOCs

Total emissions of VOCs was measured in accordance with the above-described method. Double-sided PSA sheets from the respective examples that had been cut to a size of 1 cm x 5 cm were used as the samples. More specifically, a first PSA liner was removed from each PSA sheet, and aluminum foil was attached to the exposed first PSA face. The sample obtained by removing the second PSA liner so as to expose the second PSA face was placed in a 20 mL vial, which was then closed. The Headspace Autosampler (HSS) and gas chromatograph (GC) settings were as indicated below.
HSS: Model 7694, manufactured by Agilent Technologies
Pressurization time: 0.12 minute
Loop fill time: 0.12 minute
Loop equilibration time: 0.05 minute
Injection time: 3 minutes
Sampler loop temperature: 160°C
Transfer line temperature: 200°C
GC: Model 6890, manufactured by Agilent Technologies
Column: J&W capillary column available from GL Sciences, Inc. under the trade name "DB-ffAP" (0.533 mm inner diameter x 30 m length; membrane thickness, 1.0 µm)
Column temperature: 250°C (temperature was raised from 40°C to 90°C at a rate of 10°C/min, then to 250°C at 20°C/min, and held for 2 minutes)
Column pressure: 24.3 kPa (constant flow mode)
Carrier gas: Helium (5.0 mL/min)
Injection port: Split (split ratio, 12:1)
Injection port temperature: 250°C
Detector: FID
Detector temperature: 250°C

### Measurement of Fluorescence Intensity

Using the substrate-less PSA sheets obtained in the respective examples, the fluorescence intensities per gram of PSA sample for measurement were determined by the method described above. The amount of PSA used for DNA extraction (mass of the PSA sheet, excluding the substrate) was about 0.2 g. A Nanodrop spectrophotometer (model ND-1000) was used. The PCR apparatus was a Mastercycler thermal cycler manufactured by Eppendorf. The gel imaging system used was Gel Doc, available under this trade name from Bio Rad. The image analysis software for digitizing the fluorescence intensity was Quality One, available under this trade name from Bio Rad.

### Measurement of Adhesive Strength to SUS Stainless Steel

A first PSA liner on each double-sided PSA sheet was peeled off, and a 25 µm thick PET film was attached to the exposed first PSA face, thereby lining the PSA sheet. This lined PSA sheets were cut to a size of 20 mm (width) by 100 mm (length), thereby producing test pieces. The second PSA liner was peeled from the test piece, and the exposed second PSA face was attached to a sheet of SUS 304 stainless steel as the adherend, then pressure-bonded thereto by passing a 2 kg roller once back-and-forth over the PSA sheet. This was held at 23°C for 30 minutes, following which peeling was carried out with a tensile testing machine in accordance with JIS Z 0237 in a 23°C, 50% relative humidity environment, at a pull rate of 300 mm/min and at a peel angle of 180°, and the peel strength was measured as the adhesive strength to SUS stainless steel (N/20 mm width).
This measured was carried out on both PSA sides of each of the double-sided PSA sheets, and the average values were computed.

### 40°C Cohesive Strength

A PET film having a thickness of 50 µm was attached to a first PSA face exposed by removing a first PSA liner from each of the respective PSA sheets. These were then cut to a size of 10 mm x 100 mm to produce test pieces. The second release liner was peeled from each test piece and the second PSA face thus exposed was attached over a 10 mm x 20 mm bonding surface area to a Bakelite board (adherend) whose surface had been washed with toluene, then pressure-bonded thereto by passing a 2 kg roller once back-and-forth over the PSA sheet. This was held at 40°C for 30 minutes, following which the Bakelite board was gravitationally suspended, and a 500 g load was attached to the free end of the test piece. The displacement distance (mm) of the test piece from the initial attachment position when the test piece was held in this loaded state at 40°C for 1 hour was measured in accordance with JIS Z 0237.

**Table 4**

| Example | | 1 | 2 | 3 | 4 | 5 | 6 | 7 | 8 | 9 |
|---|---|---|---|---|---|---|---|---|---|---|
| Water treatment | Polymerization | none | none | UV | UV | UV | UV | none | none | UV |
| | Work-up | heat | UV | heat | heat | heat | heat | none | none | none |
| Amount of preservative (wt %) | | UV | 0 | 0 | 0.025 | 0.05 | 0.1 | 0 | 0.001 | 0.001 |
| Total viable count (cells/mL) | Initial | 0 | 0 | 0 | 0 | 0 | 0 | 10³ | 10² | 10² |
| | After 5 days at 30°C | 0 | 0 | 0 | 0 | 0 | 0 | 10⁷ | 10⁶ | 10⁶ |
| Fluorescence intensity F (×10⁵/g) | | 4.0 | 4.2 | 3.9 | 2.1 | 1.9 | 1.8 | 5.5 | 5.3 | 5.2 |
| Total VOCs (µg/g) | | 90 | 90 | 90 | 90 | 90 | 90 | 90 | 90 | 90 |
| Adhesive strength (N/20 mm) | | 13 | 13 | 13 | 13 | 13 | 13 | 13 | 13 | 13 |
| 40% Cohesive strength (mm) | | 0.3 | 0.3 | 0.3 | 0.3 | 0.3 | 0.3 | 0.3 | 0.3 | 0.3 |

As shown in Table 4, each of the PSA compositions in Examples 7 to 9 obtained using untreated soft water in the work-up had an initial total vial count at a level at which an unpleasant odor is difficult to detect (below 10⁶ cells/mL), but the total viable count after 5 days of storage at 30°C was at a level at which an unpleasant odor is detected (10⁶ cells/mL or more). The fluorescence intensities for these PSA compositions were also at levels at which an unpleasant odor is sensed (5.5x 10⁵/g or above). Of these, Examples 8 and 9 contained a preservative, but the results indicated that the number of contaminating viable microorganisms exceeded the effects of the preservative.
By contrast, the PSA compositions in Examples 1 to 6, in which heat-treated or UV-irradiated soft water was used as the work-up water, all had a total viable count, both initially and after 5 days of storage at 30°C, of 0 cells/mL; hence, the presence of viable microorganisms capable of causing an unpleasant odor were not observed. The fluorescence intensity also did not attain a level at which an unpleasant odor is detectable. Of these examples, Examples 1 to 3, in spite of containing no preservative other than whatever was in the starting materials, were not found to have any viable microorganisms present before or after storage. These examples were confirmed to achieve preservative effects comparable with those obtained in Examples 4 to 6, which contained from 0.025 to 0.1 % of preservative.

Although various embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of producing a water-dispersed pressure-sensitive adhesive composition, wherein the pressure-sensitive adhesive composition contains as a base polymer an acrylic polymer,
the method includes using a viable cell-free water which contains essentially no viable microorganisms at least in a step subsequent to a final step in which the composition is held continuously at a temperature of at least 60°C for at least 30 minutes.

2. The method according to claim 1, comprising:
a polymerizing step of emulsion polymerizing an acrylic monomer-containing starting monomer to form an acrylic polymer emulsion; and
a blending step of blending the acrylic polymer emulsion obtained in the polymerization step and the viable cell-free water, which is mixed into the acrylic polymer emulsion subsequent to the polymerization step, so as to prepare a water-dispersed pressure-sensitive adhesive composition containing both the emulsion and the viable cell-free water, wherein
the emulsion polymerization is carried out continuously for at least 30 minutes at a polymerization temperature of at least 60°C, and the final step in which the composition is held continuously at a temperature of at least 60°C for at least 30 minutes is the polymerization step.

3. The method according to claim 2, further comprising a step of preparing the viable cell-free water, wherein in the viable cell-free water preparation step, at least one of heat treatment of heating water at a temperature of at least 60°C, high-energy treatment of exposing water to high-energy rays, and membrane filtration treatment of passing water through a porous membrane having an average pore size of not more than 0.2 µm is carried out.

4. The method according to claim 3 wherein, in the viable cell-free water preparation step, at least one of the treatments is applied to soft water having a hardness of 120 mg/L or less.

5. The method according to any one of claims 2 to 4, wherein the blending step includes adding at least one type of additive to the acrylic polymer emulsion, with the additive being added to the acrylic polymer emulsion as a solution or dispersion in the viable cell-free water.

6. The method according to any one of claims 2 to 5, wherein the blending step includes adding the viable cell-free water to the acrylic polymer emulsion so as to adjust a concentration of the pressure-sensitive adhesive composition to a predetermined target value.

7. The method according to any one of claims 2 to 6, further including a step of, following completion of the polymerization step:
adding the viable cell-free water to a reaction vessel used in the polymerization step so as to dilute and recover, with the viable cell-free water, emulsion residues adhering to the inside of the vessel, wherein
the blending step includes mixing the recovered emulsion residues and the acrylic polymer emulsion.

8. The method according to any one of claims 1 to 7 wherein, when the pressure-sensitive adhesive composition has been held in a 30°C atmosphere for 5 days, the number of viable microorganisms per milliliter of the composition following storage is less than 10⁶ cells.

9. A water-dispersed pressure-sensitive adhesive composition which comprises as a base polymer an acrylic polymer, wherein, when the pressure-sensitive adhesive composition has been held in a 30°C atmosphere for 5 days, the number of viable microorganisms present per milliliter of the composition following storage is less than 10⁶ cells.

10. The pressure-sensitive adhesive composition of claim 9 wherein, when a pressure-sensitive adhesive sheet having a pressure-sensitive adhesive layer made from the pressure-sensitive adhesive composition has been held at 80°C for 30 minutes, a total amount of volatile organic compounds released from the pressure-sensitive adhesive sheet is not more than 100 µg per gram of the pressure-sensitive adhesive sheet.

11. A pressure-sensitive adhesive sheet comprising a pressure-sensitive adhesive layer formed using the pressure-sensitive adhesive composition of claim 9 or claim 10.
